# FASCICULE DE BREVET EUROPEEN

(11) **EP 0 626 186 B1**
(45) Date de publication et mention de la délivrance du brevet: **07.01.1998**
(21) Numéro de dépôt: 94401161.8
(22) Date de dépôt: 25.05.1994
(51) Int. Cl.: B01D 24/22

(54) **Perfectionnements apportes aux dispositifs filtrants pour la clarification de liquide, notamment d'eau**
Verbesserungen bei oder in Bezug auf Filtriervorrichtungen für Flüssigkeitsklärung, insbesondere Wasser
Improvements in or relating to filtering devices for liquid clarification, especially water

(30) Priorité: 28.05.1993 FR 9306479
(43) Date de publication de la demande: 30.11.1994
(73) Titulaire: DEGREMONT, 92508 Rueil-Malmaison Cédex (FR)
(72) Inventeur: Capon, Bernard, F-78170 La Celle Saint Cloud (FR)
(74) Mandataire: Armengaud Ainé, Alain

(56) Documents cités:
- EP-A- 0 036 793
- US-A- 5 032 294
- "Aquazue Vs.La technologie de l'Aquazur V pour les grandes surfaces de filtration"

## Description

La présente invention est relative à des perfectionnements apportés aux dispositifs filtrants pour la clarification de liquides notamment d'eaux industrielles ou résiduaires.

La présente titulaire a mis au point des filtres ouverts dénommés "AQUAZUR", qui sont décrits notamment dans le "Mémento Technique de l'Eau" - page 772 - 783 - Tome 2 - neuvième édition - édité par la Société DEGREMONT - 1989 - (Editions Lavoisier), et dans EP-A-0 036 793 auxquels le lecteur pourra se référer.

Ce type de dispositif filtrant comporte un bassin ouvert réalisé en béton, comportant un plancher également généralement en béton, muni de buselures, sur lequel est disposé le lit de matériau filtrant, l'alimentation en eau brute étant effectuée par l'intermédiaire de goulottes d'alimentation disposées latéralement le long du bassin, l'eau filtrée s'évacuant sous le plancher par l'intermédiaire d'un canal axial, longitudinal. Dans ce type de filtre connu, le lavage des particules du lit filtrant s'effectue par admission d'eau et d'air de lavage sous le plancher à buselures, les eaux de lavage étant évacuées par l'intermédiaire d'une goulotte longitudinale disposée selon l'axe du bassin.

Ces installations filtrantes donnent satisfaction. Cependant, la présente invention se propose d'y apporter des perfectionnements permettant notamment de limiter le débit instantanné de rinçage sur les filtres de grande surface, étant donné que la limite à la réalisation de filtres de grandes dimensions de ce type est à l'heure actuelle le débit instantané de rinçage. Par ailleurs, l'invention se propose d'améliorer l'alimentation en eau à filtrer de tels filtres de grandes dimensions, en réalisant une équi-répartition de cette alimentation sur toute la longueur du filtre. La présente invention a donc pour objet un dispositif filtrant pour la clarification de liquides notamment d'eaux industrielles ou résiduaires du type comportant un bassin ouvert pourvu d'un plancher à buselures supportant le lit filtrant, des goulottes latérales pour l'arrivée de l'eau brute, un canal d'évacuation de l'eau filtrée, des moyens de lavage du matériau du filtre et une goulotte axiale d'évacuation des eaux de lavage, ce dispositif étant caractérisé en ce que le fond du filtre, sous le plancher, est séparé selon son axe longitudinal par une cloison étanche délimitant dans le filtre deux cellules indépendantes.

Selon une caractéristique de la présente invention, chaque cellule du filtre comporte une entrée pour l'eau de lavage et une entrée d'air de lavage ainsi qu'une vanne de régulation.

Selon l'invention, le filtre ne comporte qu'une seule pompe de lavage, cette dernière étant pourvue d'une vanne de répartition de l'eau de lavage entre les deux cellules du filtre.

Selon encore une autre caractéristique de la présente invention, les goulottes d'alimentation en eau à filtrer, disposées latéralement le long du bassin du filtre, sont conçues de façon à assurer une double fonction :
- une équi-répartition de l'eau à traiter sur toute la longueur de chaque cellule du filtre en phase de filtration, et,
- une équi-répartition de l'eau de balayage, utilisée en phase de lavage du filtre.

Selon une autre caractéristique du dispositif filtrant objet de l'invention, chaque goulotte comprend une paroi inférieure inclinée vers l'intérieur du bassin du filtre et comportant des orifices calibrés et elle se prolonge vers le haut par une paroi verticale munie d'orifices, l'eau brute à filtrer étant introduite par les orifices des parois inclinées et verticales, cependant que l'eau de balayage est introduite lors du lavage de la cellule concernée, par l'intermédiaire des orifices inférieurs.

D'autres caractéristiques et avantages de la présente invention ressortiront de la description faite ci-après en référence aux dessins annexés qui en illustrent un exemple de réalisation dépourvu de tout caractère limitatif. Sur les dessins :
- la figure 1 est une coupe transversale, par un plan vertical, d'un dispositif filtrant selon la présente invention, représenté en phase de filtration et ;
- la figure 2 est une vue similaire à la figure 1 représentant le dispositif filtrant en phase de lavage et de balayage sur l'une de ses cellules.

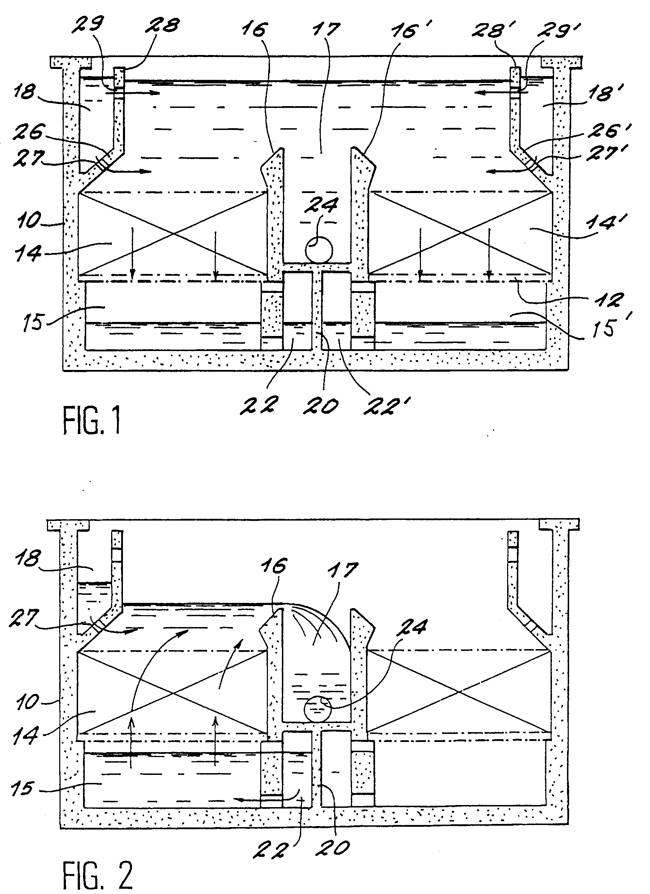

En se référant aux dessins et plus particulièrement à la figure 1, on y a représenté un filtre selon la présente invention qui, ainsi qu'on la précisé ci-dessus, constitue un perfectionnement du filtre "AQUAZUR" conçu par la présente titulaire.

Il s'agit donc d'un filtre ouvert destiné aux installations de clarification d'eaux industrielles ou résiduelles, de fort débit pouvant être lavé simultanément ou successivement à l'air et à l'eau. Comme on le voit sur la figure 1, un tel filtre se présente sous la forme d'un bassin réalisé en béton comportant un plancher de filtre 12, généralement réalisé en béton et du type à buselures. Ce plancher supporte la couche de matériau filtrant 14,14', constitué généralement de sable. L'alimentation en eau brute à filtrer s'effectue par l'intermédiaire de goulottes latérales 18, 18'. L'eau et l'air de lavage sont introduits, en phase de lavage du filtre, sous le plancher filtrant, l'évacuation des eaux de lavage étant effectuée à l'aide d'une conduite 24 placée à la partie inférieure d'une goulotte axiale longitudinale 17 délimitée par deux cloisons longitudinales 16, 16'. Ces dispositions sont décrites dans l'ouvrage mentionné ci-dessus auquel le lecteur est prié de se reporter.

Afin de limiter le débit instantanné de rinçage sur un filtre du type décrit ci-dessus, de grandes dimensions, la présente invention prévoit sous le plancher 12 du filtre, une cloison de séparation étanche 20 permettant de délimiter deux cellules indépendantes de filtration. Dans l'exemple considéré, chacune de ces cellules comporte donc un lit filtrant, 14, respectivement 14', une enceinte de recueil de l'eau filtrée 15 respectivement 15' et un canal d'évacuation de l'eau filtrée et d'alimentation en air et eau de lavage, 22 respectivement 22'.

Bien entendu, le fait d'individualiser chaque cellule du filtre conduit à prévoir deux entrées pour l'eau de lavage et deux entrées pour l'air de lavage, ainsi que deux vannes de régulation asservies au même niveau. Cependant, il ne s'agit pas là d'un inconvénient étant donné que ces vannes de régulation sont de dimension plus faible et donc moins coûteuses, qu'une vanne unique qui serait nécessaire sur un dispositif filtrant classique à une seule cellule et de grandes dimensions.

Dans le dispositif filtrant, objet de la présente invention, les goulottes 18, 18' prévues sur le bassin pour l'alimentation en eau brute à traiter sont conçues de façon à assurer d'une part l'équi-répartition de l'eau brute sur toute la longueur du filtre en phase de filtration et d'autre part, l'équi-répartition de l'eau de balayage en phase de lavage du matériau 14, 14' du filtre.

Cette disposition permet d'éviter les inconvénients que l'on constate sur les dispositifs filtrants actuellement réalisés, qui résultent d'écarts de temps entre l'alimentation de l'eau brute à l'une des extrémités du filtre et son arrivée, à l'extrémité opposée, écarts de temps qui peuvent être préjudiciables à la filtration, en particulier dans le cas d'une coagulation sur filtre. Les déséquilibres ainsi constatés peuvent être sensibles et l'évolution de la nature du floc peut conduire à des vitesses de filtration différentes aux différents emplacements du filtre.

Ainsi, selon la présente invention, chacune des goulottes 18, 18' comprend une paroi inférieure respectivement 26, 26', inclinée vers l'intérieur du bassin et comportant des orifices calibrés 27 et 27' respectivement, chacune de ces parois inférieures se prolongeant vers le haut par une paroi verticale respectivement 28 et 28', également munie d'orifices 29,29' respectivement.

Sur la figure 1, on a représenté le filtre selon l'invention en phase de filtration. On voit que l'eau brute délivrée par les goulottes 18 et 18' est introduite dans le bassin par l'intermédiaire des orifices 26, 26', 29, 29', les cloisons verticales 28, 28' n'étant pas noyées, ce qui permet d'obtenir une alimentation régulière du bassin du filtre, sur toute la longueur du bassin, ce qui élimine les inconvénients mentionnés ci-dessus, des installations classiques de ce type. L'eau filtrée par passage sur le matériau filtrant 14, 14', de chaque cellule, est évacuée par l'intermédiaire des canaux indépendants, 22, 22', de chaque cellule.

Ce type d'alimentation peut également être appliqué à la filtration d'eau décantée provenant d'eau brute fortement chargée. Dans ce cas, le floc s'échappant du décanteur dispose encore d'une bonne vitesse de sédimentation et l'on peut observer une décantation préférentielle vers la zone d'alimentation. Grâce à l'équi-répartition de l'eau obtenue par la conception décrite ci-dessus des goulottes selon l'invention 18 et 18', on peut supprimer ou au moins réduire très sensiblement un tel phénomène.

La figure 2 représente le filtre en phase de lavage sur l'une de ses cellules (côté gauche en regardant la figure). L'eau de lavage 15 et/ou l'air de lavage est introduit sous le plancher du filtre par l'intermédiaire du canal 22, traverse le lit filtrant 14, elle subit un balayage par de l'eau brute introduite au travers des orifices 27 ménagés dans la paroi inclinée 26 de la goulotte 18 et elle est évacuée par-dessus la cloison 16 dans la goulotte axiale 17 et par la conduite d'évacuation 24. Cette figure montre clairement la faculté de l'invention selon laquelle chacune des cellules du filtre peut être lavée indépendamment de l'autre.

Les dispositions objet de la présente invention peuvent s'appliquer en particulier :
- aux filtres à sable à forte hauteur de couche dans lesquels on observe, en fin de période de soufflage, une rétention d'air parfois excessive due à l'utilisation de certains réactifs (notamment polymères cationiques) ;
- aux filtres à charbon actif en grains : pour extraire le charbon des filtres, il est nécessaire de le fluidiser et l'invention permet, en ne fluidisant qu'une seule cellule à la fois, de réaliser des économies d'eau ;
- aux filtres bicouches : les débits de rinçage normalement appliqués sur ce type de filtre varient de 40 à 60m/h, ce qui conduit à des débits instantannés extrèmement élevés pour les filtres de grande surface (par exemple 12.000 m³/h pour un filtre de 200m² ). Le lavage par cellule permet de diviser par deux ces débits avec l'influence que cela a non seulement sur les pompes de lavage, les collecteurs ... mais également sur les canaux et le réseau d'évacuation des eaux de lavage.

## Revendications

1. Dispositif filtrant pour la clarification de liquides notamment d'eaux industrielles ou résiduaires du type comportant un bassin ouvert pourvu d'un plancher à buselures supportant le lit filtrant, des goulottes latérales pour l'arrivée de l'eau brute, un canal d'évacuation de l'eau filtrée, des moyens de lavage du matériau du filtre et une goulotte axiale d'évacuation des eaux de lavage, ce dispositif étant caractérisé en ce que le fond du filtre, sous le plancher (12) est séparé selon son axe longitudinal par une cloison étanche (20) délimitant dans le filtre deux cellules indépendantes (15, 15').

2. Dispositif selon la revendication 1 caractérisé en ce que , chaque cellule du filtre comporte une entrée pour l'eau de lavage et une entrée d'air de lavage (22,22') ainsi qu'une vanne de régulation.

3. Dispositif selon l'une quelconque des revendications précédentes caractérisé en ce qu'il ne comporte qu'une seule pompe de lavage, cette dernière étant pourvue d'une vanne de répartition de l'eau de lavage entre les deux cellules du filtre.

4. Dispositif selon l'une quelconque des revendications précédentes caractérisé en ce que les goulottes d'alimentation en eau à filtrer (18, 18'), disposées latéralement le long du bassin du filtre, sont conçues de façon à assurer une double fonction :
- une équi-répartition de l'eau à traiter sur toute la longueur de chaque cellule du filtre en phase de filtration, et,
- une équi-répartition de l'eau de balayage, utilisée en phase de lavage du filtre.

5. Disposition selon la revendication 4 caractérisé en ce que chaque goulotte (18, 18') comprend une paroi inférieure (26, 26') inclinée vers l'intérieur du bassin et comportant des orifices calibrés (27, 27') et elle se prolonge vers le haut par une paroi verticale (28, 28') munie d'orifices (29, 29'), l'eau brute à filtrer étant introduite par les orifices (27, 27', 29, 29') des parois inclinées et verticales, cependant que l'eau de balayage est introduite lors du lavage de la cellule concernée, par l'intermédiaire des orifices inférieurs (27, 27') prévus dans les parois inclinées (26, 26').

## Claims

1. Filter device for the clarification of liquids, notably of industrial effluents or waste waters, of the type comprising an open-topped tank provided with a perforated floor supporting the filter bed, lateral channels for the infeed of the raw water, a discharge channel for the filtered water, means for washing the material of the filter and an axial discharge channel for the washing waters, this device being characterized in that the base of the filter, beneath the floor (12), is divided along its longitudinal axis by a leaktight partition (20) defining, in the filter, two independent cells (15, 15').

2. Device according to Claim 1, characterized in that each cell of the filter comprises an inlet for the washing water and an inlet for washing air (22, 22') and also a regulator valve.

3. Device according to any one of the preceding Claims, characterized in that it comprises only a single washing pump, this being equipped with a valve for the distribution of the washing water between the two cells of the filter.

4. Device according to any one of the preceding Claims, characterized in that the feed channels for water to be filtered (18, 18'), disposed laterally along the filter tank, are designed in such a manner as to assure a dual function:
- a uniform distribution of the water to be treated along the entire length of each cell of the filter during the filtration phase, and
- a uniform distribution of the scavenging water, used during the washing phase of the filter.

5. Device according to Claim 4, characterized in that each feed channel (18, 18') comprises a lower wall (26, 26'), inclined towards the interior of the tank and comprising calibrated orifices (27, 27') and it is continued upwards by a vertical wall (28, 28') provided with orifices (29, 29'), the raw water to be filtered being introduced through the orifices (27, 27', 29, 29') of the inclined and vertical walls, but the scavenging water being introduced, during washing of the cell concerned, through the intermediary of the lower orifices (27, 27') provided in the inclined walls (26, 26').

## Patentansprüche

1. Filtervorrichtung zur Klärung von Flüssigkeiten, insbesondere von Industrie- oder Abwässern, von der Art, die ein offenes Becken, das mit einem das Filterbett tragenden Boden mit Düsen versehen ist, seitliche Rinnen zur Zuführung des unbehandelten Wassers, einen Kanal zur Abführung des gefilterten Wassers, Mittel zum Waschen des Filtermaterials und eine axiale Rinne zur Abführung der Waschwasser aufweist,
dadurch **gekennzeichnet**,
daß der Grundboden des Filters unter dem Boden (12) entlang seiner Längsachse durch eine dichte Trennwand (20) unterteilt ist, die in dem Filter zwei unabhängige Zellen (15, 15') begrenzt.

2. Vorrichtung nach Anspruch 1,
dadurch **gekennzeichnet**,
daß jede Filterzelle einen Einlaß für das Waschwasser und einen Einlaß für Waschluft (22,22') wie auch ein Regelventil aufweist.

3. Vorrichtung nach einem der vorhergehenden Ansprüche,
dadurch **gekennzeichnet**,
daß sie nur eine einzige Waschpumpe aufweist, die mit einem Ventil zur Verteilung des Waschwassers auf die beiden Filterzellen versehen ist.

4. Vorrichtung nach einem der vorhergehenden Ansprüche,
dadurch **gekennzeichnet**,
daß die Rinnen zur Versorgung mit zu filterndem Wasser (18,18'), die seitlich entlang des Filterbeckens angeordnet sind, derart gestaltet sind, daß sie eine doppelte Funktion sicherstellen:
- eine gleichmäßige Verteilung des zu behandelnden Wassers über die gesamte Länge jeder Filterzelle während der Filterphase und
- eine gleichmäßige Verteilung des während der Waschphase des Filters benötigten Spülwassers.

5. Vorrichtung nach Anspruch 4,
dadurch **gekennzeichnet**,
daß jede Rinne (18,18') eine zum Inneren des Beckens geneigte und kalibrierte Öffnungen (27,27') aufweisende Innenwand (26,26') aufweist, die sich nach oben in einer vertikalen, mit Öffnungen (29,29') versehenen Wand (28,28') verlängert, und daß das unbehandelte, zu filternde Wasser über die Öffnungen (27,27',29,29') der geneigten und vertikalen Wände eingeleitet wird, wohingegen das Spülwasser während des Waschens der betroffenen Zelle über untere, in den geneigten Wänden (26,26') vorgesehene Öffnungen (27,27') eingeleitet wird.
